# EUROPÄISCHE PATENTSCHRIFT

(11) **EP 0 431 274 B1**
(45) Veröffentlichungstag und Bekanntmachung des Hinweises auf die Patenterteilung: **25.08.1993**
(21) Anmeldenummer: 90118791.4
(22) Anmeldetag: 01.10.1990
(51) Int. Cl.: B23B 31/12

(54) **Bohrfutter**
Drilling chuck
Mandrin de perçage

(30) Priorität: 08.12.1989 DE 3940587
(43) Veröffentlichungstag der Anmeldung: 12.06.1991
(73) Patentinhaber: Röhm, Günter Horst, D-89567 Sontheim (DE)
(72) Erfinder: Mack, Hans-Dieter, D-7927 Sontheim (DE)
(74) Vertreter: Fay, Hermann, Dipl.-Phys. Dr.

(56) Entgegenhaltungen:
- EP-A- 0 099 992
- EP-A- 0 229 399
- DE-B- 2 347 364
- DE-C- 3 809 316
- PATENT ABSTRACTS OF JAPAN vol. 7, no. 59 (M-199)(1204) 11 März 1983, & JP-A-57 205012 (HITACHI KOKI K.K.) 16 Dezember 1982.

## Beschreibung

Die Erfindung betrifft ein Bohrfutter mit einem Futterkörper zum Anschluß an die Bohrspindel einer Bohrmaschine, mit Spannbacken, die zwischen sich eine verstellbare Aufnahme für das Bohrwerkzeug bilden, ferner mit einem koaxial am Futterkörper drehbar und axial unverschiebbar gelagerten Spannring zum Verstellen der Spannbacken, und mit einem die Stellung der Spannbacken anzeigenden Indikatorglied.

Bohrfutter dieser Art sind aus der DE 38 09 316 C1 bekannt. Bei ihnen ist das Indikatorglied unmittelbar an einer oder allen Spannbacken angeordnet und durch ein im Futterkörper oder Spannring vorgesehenes Sichtfenster hindurch von außen optisch erkennbar. Das Indikatorglied nimmt an der Verstellung der Spannbacken teil und kann als hervorgehobene Marke an den Spannbacken oder als im Umfang dehnfähiger flexibler Ring ausgebildet sein, der an den vom Futterkörper frei gelassenen rückwärtigen Enden der Spannbacken gemeinsam um alle Spannbacken herumgeschlungen ist. - Derart unmittelbar an den Spannbacken sitzende Indikatorglieder sind nur in Verbindung mit dazu besonders angepaßten Bauformen des Bohrfutters möglich. Überdies entstehen Schwierigkeiten, wenn, beispielsweise im Rahmen einer automatischen Überwachung und/oder Steuerung der Spannbackeneinstellung, das Indikatorglied als Stellungsmelder auszubilden ist, dessen Lage von einem außerhalb des Bohrfutters feststehend an der Bohrmaschine vorzusehenden Stellungssensor erfaßt werden soll.

Der Erfindung liegt die Aufgabe zugrunde, ein Bohrfutter der eingangs genannten Art so auszubilden, daß die Anordnung und Ausbildung des Indikatorglieds weitgehend unabhängig von speziellen Bauformen des Bohrfutters verwirklicht werden kann, und daß das Indikatorglied die Möglichkeit bietet, als Stellungsmelder für einen außerhalb des Bohrfutters befindlichen festen Stellungssensor zu dienen.

Diese Aufgabe wird bei einem Bohrfutter der eingangs genannten Art nach der Erfindung dadurch gelöst, daß das Indikatorglied sowohl am Spannring als auch am Futterkörper geführt ist und die Führung am einen dieser beiden Futterteile, Spannring oder Futterkörper, als Gewindeführung mit koaxial zur Drehachse verlaufenden Gewindegängen und am jeweils anderen Futterteil als quer zu diesen Gewindegängen in Richtung der Gewindehöhe verlaufende Translationsführung ausgebildet ist.

Durch die Gewindeführung einerseits und die Translationsführung andererseits verstellt sich das Indikatorglied in Richtung der Translationsführung nach Maßgabe der Relativverdrehung zwischen dem Spannring und dem Futterkörper, die eindeutig mit der Stellung der Spannbacken im Bohrfutter verknüpft ist, so daß die Stellung des Indikatorglieds längs seiner Translationsführung ein Maß für die Spannbackenstellung bildet, wie diese auch immer im einzelnen ausgebildet und im Bohrfutter angeordnet sein mögen. Da im übrigen das Indikatorglied nicht mehr unmittelbar an den Spannbacken sitzt, kann es unschwer immer so ausgebildet und angeordnet werden, daß seine Stellung von einem fest außerhalb des Bohrfutters vorgesehenen Stellungssensor erfaßt werden kann.

Im einzelnen ist eine bevorzugte Ausführungsform dadurch gekennzeichnet, daß das Indikatorglied als radial zwischen dem Futterkörper und dem Spannring angeordneter und sich mit der Drehung des Spannrings axial verstellender Indikatorring ausgebildet ist. Zweckmäßigerweise kann der Indikatorring mit einem zylindrischen Außengewinde in einem am Spannring vorgesehenen entsprechenden Innengewinde laufen und am Futterkörper undrehbar und axial verschiebbar geführt sein. Es empfiehlt sich dann, daß der Indikatorring axial aus dem Spannring vorsteht und am vorstehenden Teil mit Stellungsindikatoren versehen ist, die als Stellungsmelder zur selbsttätigen Erfassung der axialen Stellung und/oder der Winkelstellung des Indikatorrings gegenüber an der Bohrmaschine festen Stellungssensoren ausgebildet sind. Selbstverständlich besteht aber auch die umgekehrte Möglichkeit, daß der Indikatorring mit einem zylindrischen Innengewinde in einem am Futterkörper vorgesehenen entsprechenden Außengewinde läuft und am Spannring undrehbar und axial verschiebbar geführt ist. In diesem Fall empfiehlt es sich, daß der Indikatorring mit radial auswärts gerichteten Führungsansätzen den Spannring in die Führungsansätze aufnehmenden axialen Führungsschlitzen nach außen durchgreift. Zweckmäßigerweise wird dann die Anordnung so getroffen, daß die Führungsansätze Stellungsindikatoren tragen oder von Stellungsindikatoren gebildet sind, die als Stellungsmelder zur selbsttätigen Erfassung der axialen Stellung und/oder der Winkelstellung des Indikatorrings gegenüber an der Bohrmaschine festen Stellungssensoren ausgebildet sind.

Eine andere bevorzugte Ausführungsform der Erfindung ist dadurch gekennzeichnet, daß das Indikatorglied als bohrspindelseitig axial vor dem Futterkörper angeordneter und sich mit der Drehung des Spannrings radial verstellender Indikatorschieber ausgebildet ist. Dazu empfiehlt es sich, die Anordnung konstruktiv so zu treffen, daß der Spannring bohrspindelseitig den Futterkörper mit einer ringförmigen Stirnwand übergreift, an der der Indikatorschieber radial verstellbar geführt ist, und daß der Futterkörper auf seiner der Stirnwand gegenüber liegenden Stirnfläche ein ebenes Spiralgewinde aufweist, in dessen Gewindegängen der Indikatorschieber läuft. Zweckmäßig ist die Stirnwand des Spannrings mit einem radialen Führungsschlitz versehen, in dem längsverschiebbar der Indikatorschieber geführt ist. Hier besteht die vorteilhafte Möglichkeit, daß der Indikatorschieber aus dem Führungsschlitz nach außen vorsteht und Stellungsindikatoren trägt oder von Stellungsindikatoren gebildet ist, die als Stellungsmelder zur selbsttätigen Erfassung der radialen Stellung und/oder der auf die Drehachse bezogenen Winkelstellung des Indikatorschiebers gegenüber an der Bohrmaschine festen Stellungssensoren ausgebildet sind.

Im folgenden wird die Erfindung an in der Zeichnung dargestellten Ausführungsbeispielen näher erläutert; es zeigen:
- Fig. 1: ein Bohrfutter nach der Erfindung im Axialschnitt, mit nur schematisch und teilweise dargestellter Bohrmaschine,
- Fig. 2: eine andere Ausführungsform des erfindungsgemäßen Bohrfutters, ebenfalls im Axialschnitt,
- Fig. 3: eine weitere Ausführungsform des Bohrfutters nach der Erfindung im Axialschnitt,
- Fig. 4: eine nochmals andere Ausführungsform des erfindungsgemäßen Bohrfutters im Axialschnitt, und
- Fig. 5: eine Stirnansicht des Bohrfutters nach Fig. 4, gesehen von der Seite der Bohrspindel her.

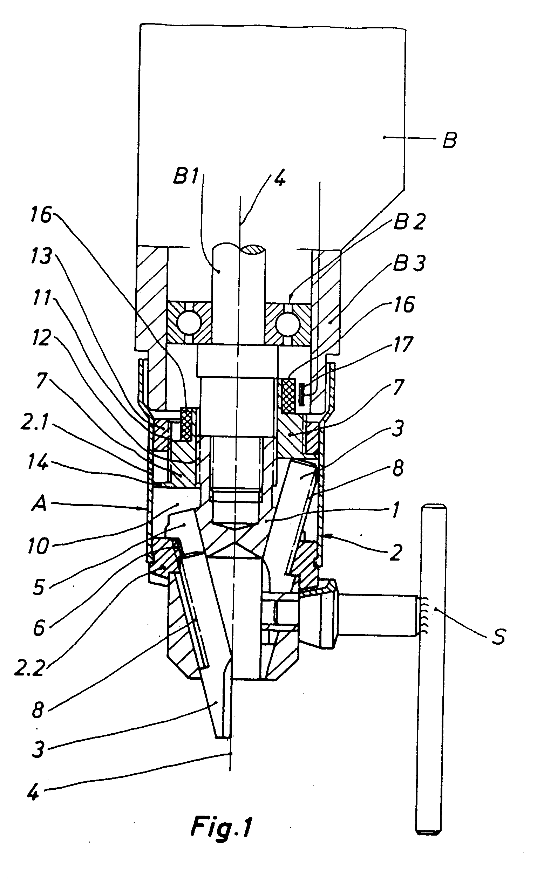

In Fig. 1 der Zeichnung ist der vordere Teil einer Bohrmaschine B mit der Bohrspindel B1, dem Spindellager B2 und dem Spindelhals B3 dargestellt. Im übrigen ist in der Zeichnung durchweg der Futterkörper des Bohrfutters A mit 1 und der Spannring mit 2 bezeichnet. Die üblicherweise zu dritt über den Umfang des Bohrfutters verteilten und zwischen sich eine Aufnahme für das nicht dargestellte Bohrwerkzeug bildenden Spannbacken tragen die Bezugsziffer 3. Die Spannbacken 3 sind symmetrisch um die Drehachse 4 des Bohrfutters im Futterkörper 1 in Führungsbohrungen 5 angeordnet, die in zur Drehachse 4 geneigter Richtung verlaufen, so daß die Achsen der Führungsbohrungen 5 nach vorn, d. h. zum Bohrwerkzeug hin, zusammenlaufen. Der Spannring 2 ist koaxial zur Drehachse 4 am Futterkörper 1 angeordnet. Er ist drehbar und axial unverschiebbar am Futterkörper 1 gelagert und zum Verstellen der Spannbacken 3 in deren Führungsbohrungen 5 mit einem mit der Drehachse 4 koaxialen Spanngewinde 6 versehen. Dieses Spanngewinde 6 ist entsprechend der Neigung der Spannbacken 3 gegen die Drehachse 4 konisch ausgebildet und steht an jeder Spannbacke 3 mit einer an der Spannbacke vorgesehenen Zahnreihe 8 im Eingriff, so daß eine Drehung des Spannrings 2 ein Verschieben der Spannbacken 3 in den Führungsbohrungen 5 ergibt. Die Spannbacken 3 sind im wesentlichen kreiszylindrische Bolzen, die auf der dem Spanngewinde 6 zugewandten Seite abgeflacht und dort mit der Zahnreihe 8 ausgestattet sind. Die dem voll geöffneten Zustand des Bohrfutters entsprechende Stellung der Spannbacken 3 ist in der Zeichnung jeweils in der rechten Figurenhälfte, die dem vollständig geschlossenen Zustand entsprechende Spannbackenstellung in der linken Figurenhälfte dargestellt.

Die Führungsbohrungen 5 treten rückwärtig an der Mantelfläche des Futterkörpers 1 aus. In diesem Bereich besitzt der Spannring 2 einen umfangsmäßig geteilten, in einer Ringnutdes Futterkörpers 1 angeordneten Gewindering 2.2 an dem das Spanngewinde 6 ausgebildet ist. Weiter besitzt der Spannring 2 eine Spannhülse 2.1, die den geteilten Gewindering 2.2 zusammenhält und in Verbindung mit dem Futterkörper 1 einen Ringraum 10 bildet, in den die Spannbacken 3 aus den Führungsbohrungen 5 austreten.

Zur Anzeige der Stellung der Spannbacken 3 ist ein Indikatorglied 7, 9 vorgesehen, das sowohl am Spannring 2 als auch am Futterkörper 1 geführt ist und sich entsprechend der Relativverdrehung zwischen dem Spannring 2 und dem Futterkörper 1 verstellt, so daß seine Stellung ein eindeutiges Maß für die jeweilige Stellung der Spannbacken 3 in ihren Führungsbohrungen 5 bildet. Dazu ist die Führung des Indikatorglieds 7, 9 einerseits als Gewindeführung 11 mit koaxial zur Drehachse 4 verlaufenden Gewindegängen und andererseits als quer zu diesen Gewindegängen in Richtung der Gewindehöhe verlaufende Translationsführung 12 ausgebildet.

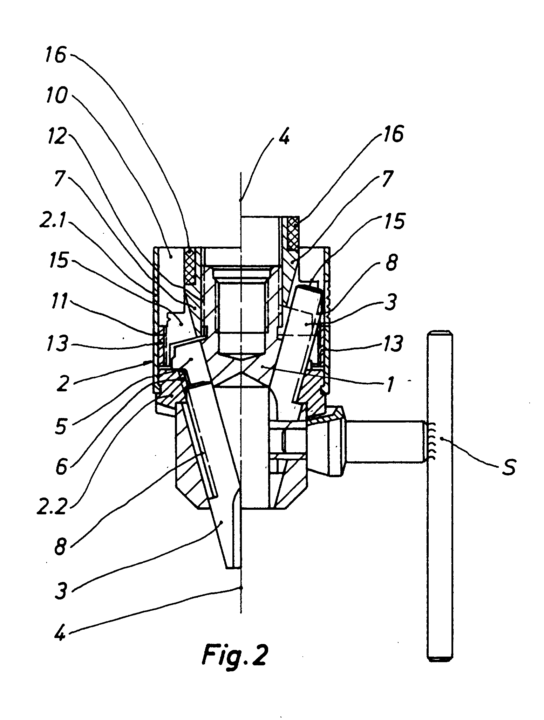

Im Ausführungsbeispiel nach den Fig. 1 bis 3 ist das Indikatorglied als radial im Ringraum 10 zwischen dem Futterkörper 1 und dem Spannring 2 angeordneter und sich mit der Drehung des Spannrings 2 axial verstellender Indikatorring 7 ausgebildet. Dazu läuft in den Ausführungsbeispielen nach den Fig. 1 und 2 der Indikatorring 7 mit einem zylindrischen Außengewinde in einem am Spannring 2 vorgesehenen entsprechenden Innengewinde. Wobei das Außen- und das Innengewinde gemeinsam die Gewindeführung 11 bilden. Am Futterkörper 1 ist der Indikatorring undrehbar und axial verschiebbar geführt (Translationsführung 12). In Fig. 1 befindet sich das Innengewinde an einem in die Spannhülse 2.1 fest eingesetzten Verstärkungsring 13, der im übrigen dazu dienen kann, die Spannhülse 2.1 zu versteifen, so daß sie aus dünnwandigem Blech bestehen kann. Im übrigen kann der Indikatorring 7 an seiner den Spannbacken 3 zugewandten Stirnseite einen der Spannhülse 2 anliegenden Dichtring 14 als Schmutzabweiser tragen. - Während sich in Fig. 1 der Verstärkungsring 13 am bohrspindelseitig äußeren Ende der Spannhülse 2.1 befindet, ist er im Ausführungsbeispiel nach Fig. 2 dicht am Gewindering 2.2 angeordnet. Dann soll der Indikatorring 7 Öffnungen 15 besitzen, die den Durchtritt der Spannbacken 3 in der voll geöffneten Stellung des Bohrfutters ermöglichen, um eine möglichst kurze axiale Baulänge des Bohrfutters zu erhalten. - In beiden in den Fig. 1 und 2 gezeigten Ausführungsformen steht der Indikatorring 7 axial aus dem Spannring 2 bohrspindelseitig vor und ist am vorstehenden Teil mit Stellungsindikatoren 16 versehen, die, beispielsweise als Ferritstücke oder Ferritringe ausgebildet sein können und als Stellungsmelder zur selbsttätigen Erfassung der axialen Stellung und/oder der Winkelstellung des Indikatorrings 7 in Bezug auf nur in Fig. 1 nicht dargestellte, an der Bohrmaschine, nämlich am Spindelhals B3 feste Stellungssensoren 17 dienen können.

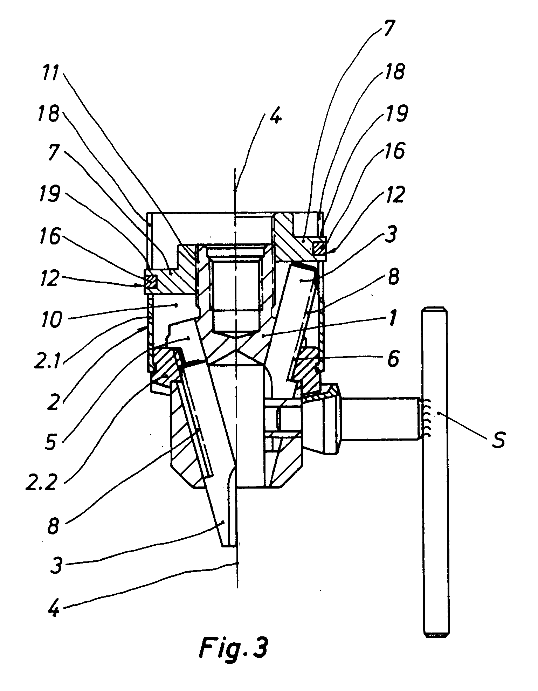

In Fig. 3 läuft der Indikatorring 7 mit einem zylindrischen Innengewinde in einem am Futterkörper 1 vorgesehenen entsprechenden Außengewinde (Gewindeführung 11). Am Spannring 2 ist der Indikatorring 7 undrehbar und axial verschiebbar geführt (Translationsführung 12). Diese Führung am Spannring 2 ist von in der Spannhülse 2.1 vorgesehenen axialen Führungsschlitzen 18 gebildet, in die der Indikatorring 7 mit radial auswärts gerichteten Führungsansätzen 19 greift, die nach außen über die Spannhülse 2.1 vorstehen. Hier können diese Führungsansätze 19 die Stellungsindikatoren 16 tragen, die wiederum als Ferritteile geeigneter Struktur und Anordnung ausgebildet sein können.

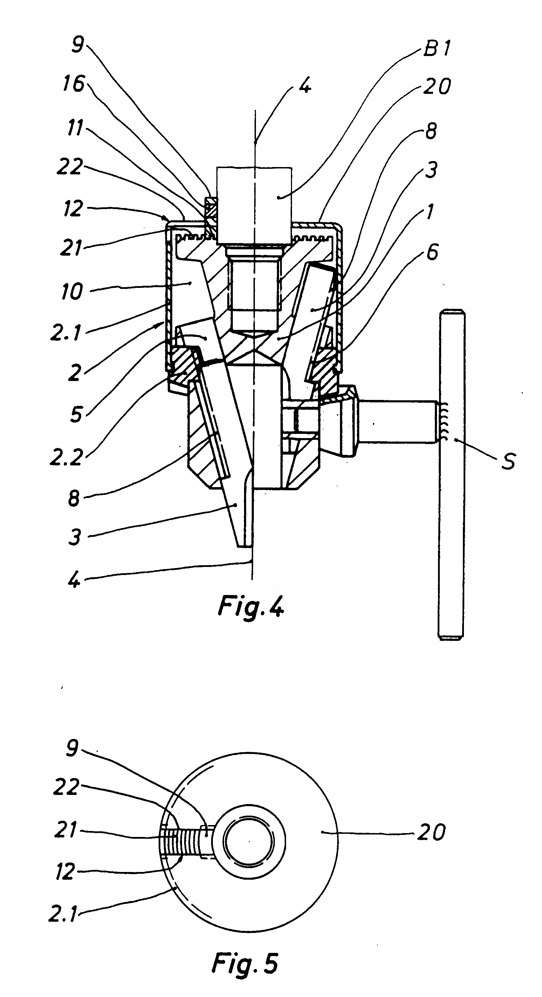

Im Ausführungsbeispiel nach den Fig. 4 und 5 schließlich ist das Indikatorglied als bohrspindelseitig axial vor dem Futterkörper 1 angeordneter und sich mit der Drehung des Spannrings 2 radial verstellender Indikatorschieber 9 ausgebildet. Der Spannring 2 übergreift bohrspindelseitig den Futterkörper 1 mit einer ringförmigen Stirnwand 20, an der der Indikatorschieber 9 radial verstellbar geführt ist. Der Futterkörper 1 besitzt auf seiner der Stirnwand 20 gegenüber liegenden Stirnfläche ein feingängiges ebenes Spiralgewinde 21, in dessen Gewindegängen der Indikatorschieber 9 läuft. Dieses Spiralgewinde 21 bildet die Gewindeführung 11. Die Stirnwand 20 des Spannrings 2 ist mit einem radialen Führungsschlitz 22 versehen, in dem der Indikatorschieber 9 ähnlich wie ein Nutstein geführt ist, also axial nicht aus dem Führungsschlitz 22 austreten kann, wodurch die Translationsführung 12 gebildet ist. Der Indikatorschieber 9 steht axial aus dem Führungsschlitz 22 nach außen vor und trägt dort wiederum einen oder mehrere Stellungsmelder 16 geeigneter Ausbildung und Anordnung.

Im übrigen zeigen die Figuren einen Bohrfutterschlüssel S, der in üblicher Weise zum Spannen und Entspannen des Bohrfutters an den Futterkörper 1 angesteckt werden kann, was keiner weiteren Beschreibung bedarf.

## Patentansprüche

1. Bohrfutter mit einem Futterkörper (1) zum Anschluß an die Bohrspindel einer Bohrmaschine, mit Spannbacken (3), die zwischen sich eine verstellbare Aufnahme für das Bohrwerkzeug bilden, ferner mit einem koaxial am Futterkörper (1) drehbar und axial unverschiebbar gelagerten Spannring (2) zum Verstellen der Spannbacken (3), und mit einem die Stellung der Spannbacken (3) anzeigenden Indikatorglied (7, 9), dadurch gekennzeichnet, daß das Indikatorglied (7, 9) sowohl am Spannring (2) als auch am Futterkörper (1) geführt ist und die Führung an einem dieser beiden Futterteile, Spannring oder Futterkörper, als Gewindeführung (1) mit koaxial zur Drehachse (4) verlaufenden Gewindegängen und am jeweils anderen Futterteil als quer zu diesen Gewindegängen in Richtung der Gewindehöhe verlaufende Translationsführung (12) ausgebildet ist.

2. Bohrfutter nach Anspruch 1, dadurch gekennzeichnet, daß das Indikatorglied als radial zwischen dem Futterkörper (1) und dem Spannring (2) angeordneter und sich mit der Drehung des Spannrings (2) axial verstellender Indikatorring (7) ausgebildet ist.

3. Bohrfutter nach Anspruch 2, dadurch gekennzeichnet, daß der Indikatorring (7) mit einem zylindrischen Außengewinde in einem am Spannring (2) vorgesehenen entsprechenden Innengewinde läuft und am Futterkörper (1) undrehbar und axial verschiebbar geführt ist.

4. Bohrfutter nach Anspruch 3, dadurch gekennzeichnet, daß der Indikatorring (7) axial aus dem Spannring (2) vorsteht und am vorstehenden Teil mit Stellungsindikatoren (16) versehen ist, die als Stellungsmelder zur selbsttätigen Erfassung der axialen Stellung und/oder der Winkelstellung des Indikatorrings (7) gegenüber an der Bohrmaschine festen Stellungssensoren (17) ausgebildet sind.

5. Bohrfutter nach Anspruch 2, dadurch gekennzeichnet, daß der Indikatorring (7) mit einem zylindrischen Innengewinde in einem am Futterkörper (1) vorgesehenen entsprechenden Außengewinde läuft und am Spannring (2) undrehbar und axial verschiebbar geführt ist.

6. Bohrfutter nach Anspruch 5, dadurch gekennzeichnet, daß der Indikatorring (7) mit radial auswärts gerichteten Führungsansätzen (19) den Spannring (2) in die Führungsansätze (19) aufnehmenden axialen Führungsschlitzen (18) nach außen durchgreift.

7. Bohrfutter nach Anspruch 6, dadurch gekennzeichnet, daß die Führungsansätze (19) Stellungsindikatoren (16) tragen oder von Stellungsindikatoren (16) gebildet sind, die als Stellungsmelder zur selbsttätigen Erfassung der axialen Stellung und/oder der Winkelstellung des Indikatorrings (7) gegenüber an der Bohrmaschine festen Stellungssensoren (17) ausgebildet sind.

8. Bohrfutter nach Anspruch 1, dadurch gekennzeichnet, daß das Indikatorglied als bohrspindelseitig axial vor dem Futterkörper (1) angeordneter und sich mit der Drehung des Spannrings (2) radial verstellender Indikatorschieber (9) ausgebildet ist.

9. Bohrfutter nach Anspruch 8, dadurch gekennzeichnet, daß der Spannring (2) bohrspindelseitig den Futterkörper (1) mit einer ringförmigen Stirnwand (20) übergreift, an der der Indikatorschieber (9) radial verstellbar geführt ist, und daß der Futterkörper (1) auf seiner der Stirnwand (20) gegenüber liegenden Stirnfläche ein ebenes Spiralgewinde (21) aufweist, in dessen Gewindegängen der Indikatorschieber (9) läuft.

10. Bohrfutter nach Anspruch 9, dadurch gekennzeichnet, daß die Stirnwand (20) des Spannrings (2) einen radialen Führungsschlitz (22) aufweist, in dem längsverschiebbar der Indikatorschieber (9) geführt ist.

11. Bohrfutter nach Anspruch 10, dadurch gekennzeichnet, daß der Indikatorschieber (9) aus dem Führungsschlitz (22) nach außen vorsteht und Stellungsindikatoren (16) trägt oder von Stellungsindikatoren (16) gebildet ist, die als Stellungsmelder zur selbsttätigen Erfassung der radialen Stellung und/oder der auf die Drehachse bezogenen Winkelstellung des Indikatorschiebers gegenüber an der Bohrmaschine festen Stellungssensoren (17) ausgebildet sind.

## Claims

1. A drilling chuck comprising a chuck body (1) for connection to the drilling spindle of a drilling machine, clamping jaws (3) which form between them an adjustable receiving means for the drilling tool, a clamping ring (2) which is rotatably and axially immovably mounted coaxially on the chuck body (1) for displacement of the clamping jaws (3), and an indicator member (7, 9) for displaying the position of the clamp ring jaws (3), characterised in that the indicator member (7, 9) is guided both on the clamping ring (2) and also on the chuck body (1) and the guide means on one of those two chuck components, clamping ring or chuck body, is in the form of a screwthread guide means (1) with screwthread pitches extending coaxially with respect to the axis of rotation (4) and the guide means on the respective other chuck component is in the form of a translation guide means (12) extending transversely to said screwthread pitches in the direction of the screwthread height.

2. A drilling chuck according to claim 1 characterised in that the indicator member is in the form of an indicator ring (7) which is arranged radially between the chuck body (1) and the clamping ring (2) and which moves axially with the rotary movement of the clamping ring (2).

3. A drilling chuck according to claim 2 characterised in that the indicator ring (7) runs with a cylindrical external screwthread in a corresponding internal screwthread provided on the clamping ring (2) and is non-rotatably and axially displaceably guided on the chuck body (1).

4. A drilling chuck according to claim 3 characterised in that the indicator ring (7) projects axially out of the clamping ring (2) and is provided at the projecting portion with position indicators (16) which are in the form of position signalling means for automatically detecting the axial position and/or the angular position of the indicator ring (7) relative to position sensors (17) which are fixed on the drilling machine.

5. A drilling chuck according to claim 2 characterised in that the indicator ring (7) runs with a cylindrical internal screwthread in a corresponding external screwthread provided on the chuck body (1) and is non-rotatably and axially displaceably guided on the clamping ring (2).

6. A drilling chuck according to claim 5 characterised in that the indicator ring (7) engages with radially outwardly directed guide projections (19) outwardly through the clamping ring (2) in axial guide slots (18) which receive the guide projections (19).

7. A drilling chuck according to claim 6 characterised in that the guide projections (19) carry position indicators (16) or are formed by position indicators (16) which are in the form of position signalling means for automatically detecting the axial position and/or the angular position of the indicator ring (7) relative to position sensors (17) which are fixed on the drilling machine.

8. A drilling chuck according to claim 1 characterised in that the indicator member is in the form of an indicator slider (9) which is arranged at the drilling spindle end axially in front of the chuck body (1) and which is radially displaceable with the rotary movement of the clamping ring (2).

9. A drilling chuck according to claim 8 characterised in that the clamping ring (2) engages at the drilling spindle end over the chuck body (1) with an annular end wall (20) at which the indicator slider (9) is radially displaceably guided and that the chuck body (1) is provided on its end face opposite the end wall (20) with a flat spiral screwthread (21), in the screwthread pitches of which the indicator slider (9) runs.

10. A drilling chuck according to claim 9 characterised in that the end wall (20) of the clamping ring (2) has a radial guide slot (22) in which the indicator slider (9) is longitudinally displaceably guided.

11. A drilling chuck according to claim 10 characterised in that the indicator slider (9) projects outwardly out of the guide slot (22) and carries position indicators (16) or is formed by position indicators (16) which are in the form of position signalling means for automatically detecting the radial position and/or the angular position relative to the axis of rotation of the indicator slider with respect to position sensors (17) which are fixed to the drilling machine.

## Revendications

1. Mandrin de perçage, comprenant un corps de mandrin (1) pour le raccordement à une broche de perçage d'une perceuse, des mâchoires de serrage (3) qui forment entre elles un logement réglable pour l'outil de perçage, de même qu'une bague de serrage (2) pour le réglage des mâchoires de serrage (3), montée coaxialement, de manière tournante et axialement immobile sur le corps de mandrin (1), et un élément indicateur (7, 9) qui indique la position des mâchoires de serrage (3), **caractérisé par le fait** que l'élément indicateur (7, 9) est guidé aussi bien sur la bague de serrage (2) que sur le corps de mandrin (1) et que le guidage est réalisé sur l'un de ces deux éléments du mandrin, bague de serrage ou corps de mandrin, sous la forme d'un guidage fileté (11) avec des spires orientées coaxialement par rapport à l'axe de rotation (4) et sur respectivement l'autre élément du mandrin, sous la forme d'un guidage de translation (12) qui s'étend transversalement par rapport à ces spires dans le sens de la hauteur du filetage.

2. Mandrin de perçage selon la revendication 1, caractérisé par le fait que l'élément indicateur est réalisé sous la forme d'une bague indicatrice (7) disposée radialement entre le corps de mandrin (1) et la bague de serrage (2) et se déplaçant axialement avec la rotation de ladite bague de serrage (2).

3. Mandrin de perçage selon la revendication 2, caractérisé par le fait que la bague indicatrice (7) tourne avec un filetage extérieur cylindrique dans un filetage intérieur correspondant prévu sur la bague de serrage (2), et qu'elle est guidée sur le corps de mandrin (1) de manière fixe en rotation et mobile dans le sens axial.

4. Mandrin de perçage selon la revendication 3, caractérisé par le fait que la bague indicatrice (7) dépasse axialement de la bague de serrage (2) et porte sur la partie en saillie des indicateurs de position (16) qui sont réalisés sous la forme de capteurs de déplacement pour la détection automatique de la position axiale et/ou de la position angulaire de la bague indicatrice (7) par rapport à des détecteurs de position (17) montés de manière fixe sur la perceuse.

5. Mandrin de perçage selon la revendication 2, caractérisé par le fait que la bague indicatrice (7) tourne avec un filetage intérieur cylindrique dans un filetage extérieur correspondant prévu sur le corps de mandrin (1) et qu'elle est guidée sur la bague de serrage (2) de manière fixe en rotation et mobile dans le sens axial.

6. Mandrin de perçage selon la revendication 5, caractérisé par le fait que la bague indicatrice (7), avec des embouts de guidage (19) orientés radialement vers l'extérieur, traverse la bague de serrage (2) vers l'extérieur dans des fentes de guidage axiales (18) qui reçoivent lesdits embouts de guidage (19).

7. Mandrin de perçage selon la revendication 6, caractérisé par le fait que les embouts de guidage (19) portent des indicateurs de position (16) ou sont constitués par des indicateurs de position (16) qui sont réalisés sous la forme de capteurs de déplacement pour la détection automatique de la position radiale et/ou de la position angulaire de la bague indicatrice (7) par rapport à des détecteurs de position (17) montés de manière fixe sur la perceuse.

8. Mandrin de perçage selon la revendication 1, caractérisé par le fait que l'élément indicateur est conformé en coulisse indicatrice (9) disposée, du côté broche de perçage, axialement devant le corps de mandrin (1) et se déplaçant radialement avec la rotation de la bague de serrage (2).

9. Mandrin de perçage selon la revendication 8, caractérisé par le fait que, du côté broche de perçage, la bague de serrage (2) recouvre le corps de mandrin (1) avec une paroi frontale annulaire (20) sur laquelle la coulisse indicatrice (9) est guidée de manière mobile dans le sens radial, et que le corps de mandrin (1) présente sur sa face frontale opposée à la paroi frontale (20), un filetage hélicoïdal plan (21) dans les spires duquel tourne la coulisse indicatrice (9).

10. Mandrin de perçage selon la revendication 9, caractérisé par le fait que la paroi frontale (20) de la bague de serrage (2) est pourvue d'une fente de guidage radiale (22) dans laquelle la coulisse indicatrice (9) est guidée de manière à pouvoir se déplacer dans le sens longitudinal.

11. Mandrin de perçage selon la revendication 10, caractérisé par le fait que la coulisse indicatrice (9) dépasse vers l'extérieur de la fente de guidage (22) et porte des indicateurs de position (16) ou est constituée par des indicateurs de position (16) qui sont réalisés sous la forme de capteurs de déplacement pour la détection automatique de la position radiale et/ou de la position angulaire de la coulisse indicatrice rapportée à l'axe de rotation, par rapport à des détecteurs de position (17) montés de manière fixe sur la perceuse.
